# EUROPEAN PATENT SPECIFICATION

(11) **EP 4 485 049 B1**
(45) Date of publication and mention of the grant of the patent: **11.11.2026**
(21) Application number: 24020162.4
(22) Date of filing: 22.05.2024
(51) Int. Cl.: G02C 5/14, G02C 5/22

(54) **A COUPLING UNIT FOR EYEGLASS FRAMES, AND AN EYEGLASS FRAME COMPRISING THE UNIT**
KUPPLUNGSEINHEIT FÜR BRILLENGESTELLE UND EIN BRILLENGESTELL MIT DIESER EINHEIT
UNITÉ DE COUPLAGE POUR MONTURES DE LUNETTES, ET MONTURE DE LUNETTES COMPRENANT L'UNITÉ

(30) Priority: 27.06.2023 PL 44536123
(43) Date of publication of application: 01.01.2025
(73) Proprietor: OVVO Optics Spólka z Ograniczona Odpowiedzialnoscia, 58-260 Bielawa (PL)
(72) Inventor: Szwaczka, Waclaw, 58-260 Bielawa (PL)
(74) Representative: Pomianek, Grazyna

(56) References cited:
- CN-A- 103 135 247
- DE-U1- 202005 001 204
- DE-U1- 202016 106 603
- FR-A1- 3 025 614
- US-A1- 2022 214 561

## Description

The invention concerns a coupling unit for eyeglass frames for coupling the eyeglass frame front to the temple in an easy and quick manner, and an eyeglass frame. In particular, the invention concerns an improved coupling for eyeglass frames made of metal.

Known in the prior art is generally rotatable connection of the temples to the frame front using various types of hinges made of plastic and/or metal so as to enable pivotal movement of the temples with respect to the front of the eyeglass frame in which the eyeglass lenses are fitted. Generally known are joints of the screw type or achieved by rotatable direct connection of the coupling elements.

For example, known from patent document WO 2005/109081 A2 is an eyeglass frame comprising the front for securing the lenses in place and the temples connected to the front in an articulated manner with a screwless hinge. One part of the hinge is fitted slidingly in the other part, where the temple has at least one spring tongue which cooperates with the sliding surface of the frame front.

Known from patent document EP 1 023 626 B1 is an eyeglass frame which comprises the front and a pair of temples connected to the front with hinges which ensure appropriate coupling without pins or screws. In this case eyeglass temples have extensions at the ends on the side of the frame, where the extensions are coiled so that they form a tube which fits into the corresponding holes in the frame.

Known from patent document US 2022/0179235 A1 is a hinged eyeglass frame having a front, a pair of temples, and a pair of hinges configured so as to ensure pivotal connection between each temple and the frame front, where each hinge comprises a pin with wedge-shaped ends and devices which block the movement of the temple.

Known from patent document EP 2 963 481 A1 is a hinge for eyeglass frame which connects the frame front and the temple. The hinge comprises the first element, where one of its ends is given the shape of a blade with the carrying edge and where its terminal edge is oriented askew with respect to the carrying edge, and which comprises fasteners. The hinge comprises the second element which features a groove the width of which corresponds to the thickness of the blade. Moreover, the hinge comprises a flexible cap which has a cross bar placed within the fastener and in addition at least one arm anchored in the second element. The cross bar tends to press the first element into the groove, where the first element and the second element can pivot with respect to each other between the open position and the closed position.

Known from patent document PL 210490 B1 is a metal eyeglass frame which comprises profiled rings with fittings in which longitudinal through-openings are made on one end, on the side of the lenses. The fittings have extensions in the form of connectors with plugs fitted in sockets on the sides, where the sockets take the form of sleeve-shaped folds at the ends of flat bars. Fitted between the flat bars are resilient strips with sockets in which the temples get blocked in the closed position. The flat bars and strips plus the temples form two homogenous subunits all elements of which are made of a thin metal sheet in the punching process. The same process is used to make the subunit punched from a thin metal sheet which comprises profiled rings of the fittings and the connectors.

Document DE 20 2016 106603 U1 discloses a spectacle frame assembly which comprises a lens frame, two connecting pieces and two temples. Inside each connecting piece there is a through slot for inserting the upper and lower connecting discs of one of the connecting sections of the lens mount. Furthermore, the connecting piece has a through hole corresponding to the recess of the connecting section. The through hole of the connecting piece is aligned with the recess of the connecting section, so that the front portion of the elastic piece of the temple passes through the through hole from the inside of the connecting piece.

Document FR 3 025 614 A1 discloses an eyeglass frame which comprises two arms and a lens-holding face, each of the arms being connectable to the lens-holding face by a hinge. Said hinge comprises a first part for connecting the hinge to the lens-holding face, a second part for connecting the hinge to the corresponding arm. The second connecting part has at its free end two external leaf springs and at least one intermediate leaf spring arranged between the external leaf springs, the external leaf springs has articulation elements capable of cooperating with articulation elements of the first connecting part to form the pivot connection of said hinge. The first part connecting element has, between its articulation elements and its free end, at least one through opening and, between its articulation elements and the glass-holder face, at least one housing, and in that the at least one intermediate leaf spring of the second connecting part is, in the pivotally coupled state of the first and second connecting parts, mounted to slide inside said opening and projects through said opening towards the outside of the interval between pivot connections to form, on the external side of the frame, a part called the projecting part whose free end is housed in the thickness of the housing in the deployed position of the branch in which the branch extends substantially orthogonally to the glass-holder face.

Document DE 20 2005 001204 U1 discloses a multi-part spectacles frame which is of fine steel or titanium, without a fixed bond between the component parts, and gives four variations of lens types. The lens mounting is cut from a sheet with side tabs and eyelets in one piece. The ear piece is in one piece with passage openings and slits. The end of the ear piece has shaped projections to fit into the tab eyelets, to act as a hinge, with a center spring to restrict the hinge swing movement.

Document CN 103 135 247 A discloses a glasses with lenses capable of being replaced. The glasses with the lenses capable of being replaced are combined in a magnetic mode through an iron sheet fixed on a foldable soft connecting sheet and a high magnetic body fixedly connected with a glasses clamping frame, and the lenses are clamped in the glasses clamping frame, so that a pair of complete glasses is formed.

Document US 2022/214561 A1 discloses a spectacle comprising a front frame with lateral lugs and respective rods, each rod-lug pair comprising a first and a second articulation element and an insert constrained to the first articulation element, a recess being defined in the insert and intended to receive, at least partially, a head of the second articulation element during the movement relative to the first articulation element, a shoulder surface defined on the insert being able to contact the head during the articulation movement, so that the second articulation element is movable from and towards open and closed positions of the rod on the mount, in a guided and contacted manner between the insert and the first articulation element, to achieve a hinge movement between the lug and the rod.

The main purpose of the present invention is to solve the problem of securing an eyeglass frame against damage whenever the temple is excessively pivoted away from the eyeglass frame front. Another purpose of the present invention is to provide an eyeglass frame which is easy to make.

According to the present invention, a coupling unit for eyeglass frames for coupling the eyeglass frame front to the temple, where the coupling unit comprises a subunit of the eyeglass frame front and a subunit of the temple, and where the subunit of the eyeglass frame front comprises two pins, and the subunit of the temple comprises two sockets in which the said pins are fitted pivotally, and where placed between the said sockets is a resilient element of the subunit of the temple which protrudes beyond the said sockets, and placed between the said pins of the subunit of the eyeglass frame front is a guiding element for the said resilient element of the subunit of the temple, wherein the subunit of the eyeglass frame front features an opening to accommodate the resilient element of the subunit of the temple whenever the temple is pivoted away from the folded position with respect to the subunit of the eyeglass frame front, is characterized in that the resilient element of the subunit of the temple passes through the opening from the outside of the subunit of the eyeglass frame front only whenever the temple is pivoted away by any angle larger than 90° with respect to the eyeglass frame front.
Preferably, the subunit of the eyeglass frame front constitutes an integral part of the eyeglass frame front referred to above.
Preferably, fixed to the guiding element of the subunit of the eyeglass frame front is an additional guiding element in the form of a cap with rounded working ends.
Preferably, the subunit of the temple constitutes an integral part of the said temple.
Preferably, the resilient element of the subunit of the temple features a profiled socket to accommodate the ends of the guiding element of the subunit of the eyeglass frame front or the ends of the additional guiding element fixed to the said guiding element of the subunit of the eyeglass frame front, in the folded and unfolded position of the temple.
The eyeglass frame according to the present invention comprises an eyeglass frame front, two temples, and two coupling units to connect the front of the eyeglass frame to the temples, as described above.
Preferably, the eyeglass frame front and the temples are made of metal. Preferably, the free ends of the temples feature flexible elements.

The solution according to the invention meets the assumed purpose.

The invention in its embodiments is shown on a drawing, where:
Fig. 1 presents the assembled coupling unit in a perspective view in the position when the temple is folded;
Fig. 2 shows the assembled coupling unit in a perspective view in the position when the temple is unfolded;
Fig. 3 depicts the assembled coupling unit in a perspective view with excessively unfolded temple;
Fig. 4 shows the subunit of the eyeglass frame front and the subunit of the temple prior to assembly, in a perspective view.

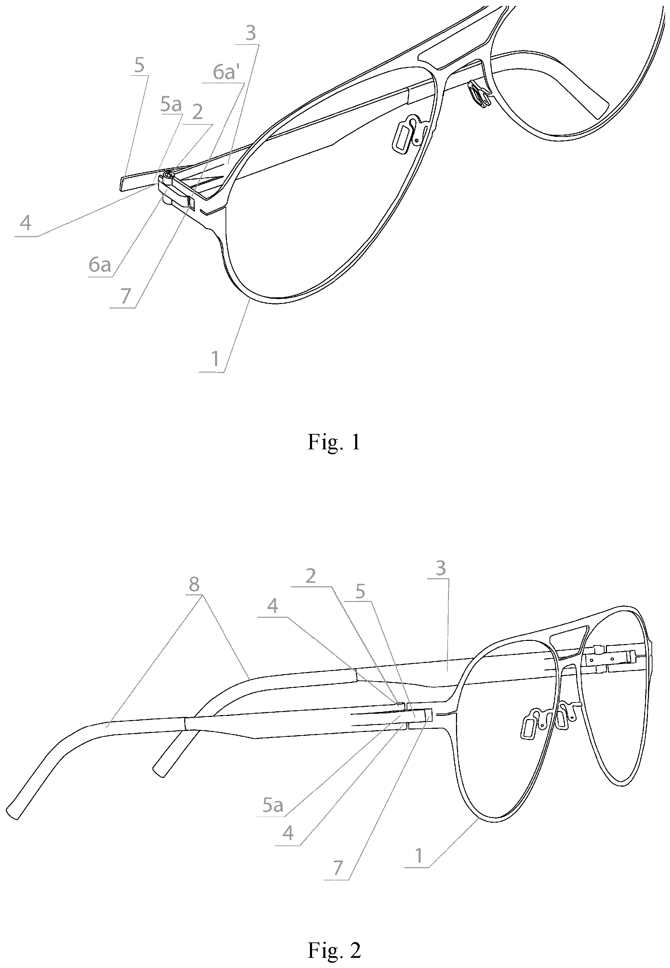

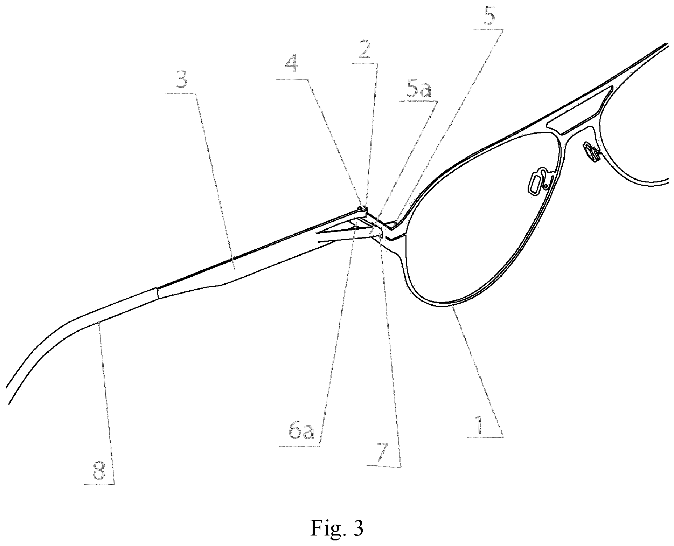

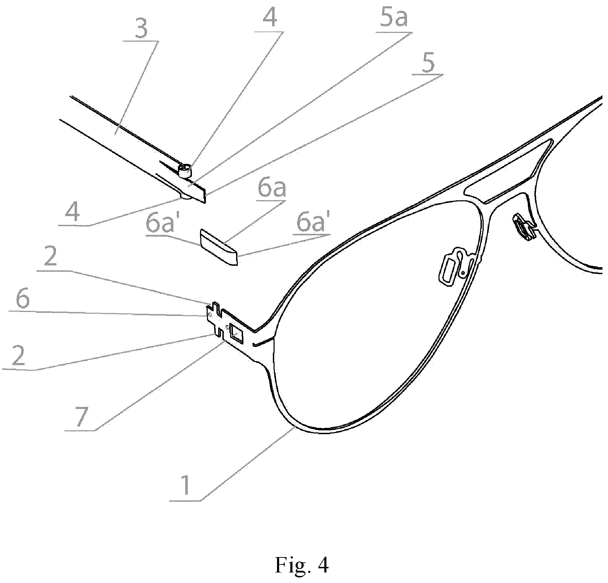

In the exemplary embodiment of the invention, a coupling unit for eyeglass frames for coupling the eyeglass frame front 1 to the temple 3 comprises a subunit of the frame front 1 of the eyeglass frame and a subunit of the temple 3, as shown in Fig. 4. The subunit of the frame front 1 of the eyeglass frame comprises two pins 2, and the subunit of the temple 3 comprises two sockets 4 in which the said pins 2 are mounted rotationally (as shown in Fig. 1 to Fig. 3). Placed between the sockets 4 is the resilient element 5 of the subunit of the temple 3, which protrudes beyond the said sockets 4, and placed between the pins 2 of the subunit of the frame front 1 of the eyeglass frame is a guiding element 6 for the said resilient element 5. The guiding element 6 can be fitted with an additional guiding element 6a in the form of a cap with rounded working ends 6a' (as shown in Fig. 4), where the cap is fixed to the guiding element 6, and where cooperating with the ends 6a' is the resilient element 5 of the subunit of the temple 3 when the temple 3 is being unfolded and folded. The subunit of the frame front 1 of the eyeglass frame features an opening 7 to accommodate the resilient element 5 of the subunit of the temple 3 when the temple 3 is being pivoted away at any angle larger than 90° with respect to the eyeglass frame front 1, as shown in Fig. 3. The resilient element 5 of the subunit of the temple 3 can feature a profiled socket 5a to accommodate the ends of the guiding element 6 or the ends 6a' of the additional guiding element 6a, intended to stabilise the position of the resilient element 5 of the temple 3 when folded (as shown in Fig. 1) and unfolded (as shown in Fig. 2) when eyeglasses are being used.
The subunit of the frame front 1 of the eyeglass frame constitutes an integral part of the said eyeglass frame front 1, and the subunit of the temple 3 constitutes an integral part of the said temple 3, while the additional guiding element 6a is a separate part, as shown in Fig. 4. The additional guiding element 6a may be fixed to the guiding element 6, for example with rivets.
Fig. 2 presents an eyeglass frame in which the eyeglass frame front 1 where the lenses are mounted is connected to the two temples 3 via the coupling unit described above.
The eyeglass frame front 1 with the coupling subunit can be punched of metal as a uniform element, and the temples 3 together with the coupling subunit can also be punched of metal as a uniform element. Moreover, free ends of the temples 3 can be fitted with flexible elements 8.

### List of numerical references

1 - eyeglass frame front
2 - pins of the subunit of the eyeglass frame front
3 - temple
4 - sockets of the subunit of the temple
5 - resilient element of the subunit of the temple
5a - socket in the resilient element of the subunit of the temple
6 - guiding element of the subunit of the eyeglass frame front
6a - additional guiding element of the subunit of the eyeglass frame front
6a' - ends of additional guiding element of the subunit of the eyeglass frame front
7 - opening in the subunit of the eyeglass frame front
8 - flexible element of the temple

## Claims

1. A coupling unit for eyeglass frames for coupling the eyeglass frame front to the temple, where the coupling unit comprises a subunit of the eyeglass frame front (1) and a subunit of the temple (3), and where the subunit of the eyeglass frame front (1) comprises two pins (2), and the subunit of the temple (3) comprises two sockets (4) in which the said pins (2) are fitted pivotally, and where placed between the said sockets (4) is a resilient element (5) of the subunit of the temple (3) which protrudes beyond the said sockets (4), and placed between the said pins (2) of the subunit of the eyeglass frame front (1) is a guiding element (6) for the said resilient element (5) of the subunit of the temple (3), wherein the subunit of the eyeglass frame front (1) features an opening (7) to accommodate the resilient element (5) of the subunit of the temple (3) whenever the temple (3) is pivoted away from the folded position with respect to the subunit of the eyeglass frame front (1), **characterized in that** the resilient element (5) of the subunit of the temple (3) passes through the opening (7) from the outside of the subunit of the eyeglass frame front (1) only whenever the temple (3) is pivoted away by any angle larger than 90° with respect to the eyeglass frame front (1).

2. The unit according to Claim 1, **characterized in that** the subunit of the eyeglass frame front (1) constitutes an integral part of the eyeglass frame front (1).

3. The unit according to Claims 1 or 2, **characterized in that** fixed to the guiding element (6) of the subunit of the eyeglass frame front (1) is an additional guiding element (6a) in the form of a cap with rounded working ends (6a').

4. The unit according to Claim 1, **characterized in that** the subunit of the temple (3) constitutes an integral part of the said temple (3).

5. The unit according to Claim 1, **characterized in that** the resilient element (5) of the subunit of the temple (3) features a profiled socket (5a) to accommodate the ends of the guiding element (6) of the subunit of the eyeglass frame front (1) in the folded and unfolded position of the temple (3).

6. The unit according to Claim 3, **characterized in that** the resilient element (5) of the subunit of the temple (3) features a profiled socket (5a) to accommodate the ends (6a') of the additional guiding element (6a) of the subunit of the eyeglass frame front (1) in the folded and unfolded position of the temple (3).

7. An eyeglass frame comprising an eyeglass frame front (1), two temples (3), and two coupling units according to any of the Claims 1 to 6 to connect the front (1) of the eyeglass frame to the temples (3).

8. The eyeglass frame according to Claim 7, **characterized in that** the eyeglass frame front (1) and the temples (3) are made of metal.

9. The eyeglass frame according to Claims 7 or 8, **characterized in that** the free ends of the temples (3) feature flexible elements (8).

## Patentansprüche

1. Eine Kupplungseinheit für Brillengestelle zur Verbindung des vorderen Teils des Brillengestells mit dem Bügel, wobei die Kupplungseinheit eine Baugruppe des vorderen Teils (1) des Brillengestells sowie eine Bügelbaugruppe (3) umfasst, und wobei die Baugruppe des vorderen Teils (1) des Brillengestells zwei Zapfen (2) und die Bügelbaugruppe (3) zwei Aufnahmen (4) umfasst, in denen die genannten Zapfen (2) drehbar gelagert sind, und wobei sich zwischen den genannten Aufnahmen (4) ein Federelement (5) der Bügelbaugruppe (3) befindet, das aus den genannten Aufnahmen (4) hinausragt, und sich zwischen den genannten Zapfen (2) der Baugruppe des vorderen Teils (1) des Brillengestells ein Führungselement (6) für das genannte Federelement (5) der Bügelbaugruppe (3) befindet, wobei die Baugruppe des vorderen Teils (1) des Brillengestells mit einer Öffnung (7) zur Aufnahme des Federelements (5) der Bügelbaugruppe (3) versehen ist, wenn der Bügel (3) aus der eingeklappten Position in Bezug auf die Baugruppe des vorderen Teils (1) des Brillengestells ausgeschwenkt ist, **dadurch gekennzeichnet, dass** das Federelement (5) der Bügelbaugruppe (3) in die Öffnung (7) von der Außenseite der Baugruppe des vorderen Teils (1) des Brillengestells her nur dann eingeführt wird, wenn der Bügel (3) um einen Winkel von mehr als 90° zum vorderen Teil (1) des Brillengestells ausgeschwenkt ist.

2. Die Einheit nach Anspruch 1, **dadurch gekennzeichnet, dass** die Baugruppe des vorderen Teils (1) des Brillengestells ein integraler Bestandteil des genannten vorderen Teils (1) des Brillengestells ist.

3. Die Einheit nach Anspruch 1 oder 2, **dadurch gekennzeichnet, dass** am Führungselement (6) der Baugruppe des vorderen Teils (1) des Brillengestells ein zusätzliches Führungselement (6a) in Form eines Aufsatzes mit abgerundeten Betriebsenden (6a') angebracht ist.

4. Die Einheit nach Anspruch 1, **dadurch gekennzeichnet, dass** die Bügelbaugruppe (3) ein integraler Bestandteil des genannten Brillenbügels (3) ist.

5. Die Einheit nach Anspruch 1, **dadurch gekennzeichnet, dass** das Federelement (5) der Bügelbaugruppe (3) eine Aufnahme (5a) für die Enden des Führungselements (6) der Baugruppe des vorderen Teils (1) des Brillengestells aufweist, und zwar sowohl in der eingeklappten als auch in der ausgeklappten Position des Bügels (3).

6. Die Einheit nach Anspruch 3, **dadurch gekennzeichnet, dass** das Federelement (5) der Bügelbaugruppe (3) eine Aufnahme (5a) für die Enden (6a') des zusätzlichen Führungselements (6a) der Baugruppe des vorderen Teils (1) des Brillengestells aufweist, und zwar sowohl in der eingeklappten als auch in der ausgeklappten Position des Bügels (3).

7. Ein Brillengestell, bestehend aus einem vorderen Teil (1) des Brillengestells, zwei Bügeln (3) sowie zwei Kupplungseinheiten gemäß einem der Ansprüche 1 bis 6, die den vorderen Teil (1) des Brillengestells mit den Bügeln (3) verbinden.

8. Das Brillengestell nach Anspruch 7, **dadurch gekennzeichnet, dass** der vordere Teil (1) des Brillengestells sowie die Bügel (3) aus Metall gefertigt sind.

9. Das Brillengestell nach Anspruch 7 oder 8, **dadurch gekennzeichnet, dass** die offenen Enden der Bügel (3) mit elastischen Elementen (8) versehen sind.

## Revendications

1. Unité de couplage pour montures de lunettes destinée à relier une partie avant d'une monture de lunettes à une branche, dans laquelle l'unité de couplage comprend un sous-ensemble de partie avant (1) de la monture de lunettes et un sous-ensemble de branche (3), et dans laquelle le sous-ensemble de partie avant (1) de la monture de lunettes comprend deux pivots (2) et le sous-ensemble de branche (3) comprend deux logements (4) dans lesquels lesdits pivots (2) sont montés de manière rotative, et dans laquelle un élément élastique (5) du sous-ensemble de branche (3), qui fait saillie au-delà desdits logements (4), est disposé entre lesdits logements (4), et un élément de guidage (6) pour ledit élément élastique (5) du sous-ensemble de branche (3) est disposé entre lesdits pivots (2) du sous-ensemble de partie avant (1) de la monture de lunettes, le sous-ensemble de partie avant (1) de la monture de lunettes étant pourvu d'une ouverture (7) destinée à recevoir l'élément élastique (5) du sous-ensemble de branche (3) lorsque la branche (3) est écartée de la position repliée par rapport au sous-ensemble de partie avant (1) de la monture de lunettes, **caractérisée en ce que** l'élément élastique (5) du sous-ensemble de branche (3) traverse l'ouverture (7) depuis l'extérieur du sous-ensemble de partie avant (1) de la monture de lunettes uniquement lorsque la branche (3) est écartée d'un angle supérieur à 90° par rapport à la partie avant (1) de la monture de lunettes.

2. Unité selon la revendication 1, **caractérisée en ce que** le sous-ensemble de partie avant (1) de la monture de lunettes fait partie intégrante de ladite partie avant (1) de la monture de lunettes.

3. Unité selon la revendication 1 ou 2, **caractérisée en ce qu'**un élément de guidage supplémentaire (6a), sous la forme d'une pièce rapportée présentant des extrémités fonctionnelles arrondies (6a'), est fixé à l'élément de guidage (6) du sous-ensemble de partie avant (1) de la monture de lunettes.

4. Unité selon la revendication 1, **caractérisée en ce que** le sous-ensemble de branche (3) fait partie intégrante de ladite branche (3).

5. Unité selon la revendication 1, **caractérisée en ce que** l'élément élastique (5) du sous-ensemble de branche (3) comporte un logement (5a) formé pour les extrémités de l'élément de guidage (6) du sous-ensemble de partie avant (1) de la monture de lunettes dans les positions repliée et déployée de la branche (3).

6. Unité selon la revendication 3, **caractérisée en ce que** l'élément élastique (5) du sous-ensemble de branche (3) comporte un logement (5a) formé pour les extrémités (6a') de l'élément de guidage supplémentaire (6a) du sous-ensemble de partie avant (1) de la monture de lunettes dans les positions repliée et déployée de la branche (3).

7. Monture de lunettes comprenant une partie avant (1) de la monture de lunettes, deux branches (3) et deux unités de couplage selon l'une quelconque des revendications 1 à 6, reliant la partie avant (1) de la monture de lunettes aux branches (3).

8. Monture de lunettes selon la revendication 7, **caractérisée en ce que** la partie avant (1) de la monture de lunettes et les branches (3) sont réalisées en métal.

9. Monture de lunettes selon la revendication 7 ou 8, **caractérisée en ce que** les extrémités libres des branches (3) sont pourvues d'éléments élastiques (8).
